# EUROPÄISCHE PATENTANMELDUNG

(11) **EP 3 934 192 A1**
(43) Veröffentlichungstag der Anmeldung: **05.01.2022**
(21) Anmeldenummer: 20182812.6
(22) Anmeldetag: 29.06.2020
(51) Int. Cl.: H04L 29/06

(54) **VERFAHREN ZUM AUFBAU EINER VERBINDUNG ZWISCHEN EINEM KOMMUNIKATIONSGERÄT UND EINEM SERVER UND PROXY**

(71) Anmelder: Siemens Aktiengesellschaft, 80333 München (DE)
(72) Erfinder: Albrecht, Harald, 90475 Nürnberg (DE)

(57) **Zusammenfassung**

Zum Aufbau einer Verbindung zwischen einem Kommunikationsgerät, das außerhalb eines gegenüber unautorisiertem Zugriff gesicherten Kommunikationsnetzes angeordnet ist, und einem Server, der im gesicherten Kommunikationsnetz angeordnet ist, sendet das Kommunikationsgerät (101) eine Anforderung zum Aufbau einer Verbindung mit dem Server (201). Auf die Anforderung wird eine Verbindung (3) des Kommunikationsgeräts mit einem ersten, außerhalb des gesicherten Kommunikationsnetzes (200) angeordneten Proxy (102) aufgebaut. Der erste Proxy verknüpft eine bestehende Verbindung vom zweiten Proxy zum ersten Proxy mit der Verbindung zwischen dem Kommunikationsgerät und dem ersten Proxy zu einer Verbindung zwischen dem Kommunikationsgerät und dem zweiten Proxy. Der zweite Proxy baut auf die Anforderung eine Verbindung (4) vom zweiten Proxy zum Server auf und verknüpft diese mit der Verbindung zwischen dem Kommunikationsgerät und dem zweiten Proxy zu einer Verbindung zwischen dem Kommunikationsgerät und dem Server.

## Beschreibung

Die vorliegende Erfindung betrifft ein Verfahren zum Aufbau einer Verbindung zwischen einem Kommunikationsgerät, das außerhalb eines gegenüber unautorisiertem Zugriff gesicherten Kommunikationsnetzes angeordnet ist, und einem Server, der im gesicherten Kommunikationsnetz angeordnet ist, sowie einen dem Kommunikationsgerät zugeordneten Proxy und einen dem Server zugeordneten Proxy. Insbesondere ist das Verfahren dafür vorgesehen, dass sich Clients von außerhalb einer geschützten Zelle eines industriellen Automatisierungssystems mit Servern bzw. Automatisierungsgeräten innerhalb der geschützten Zelle verbinden können.

Ein industrielles Automatisierungssystem umfasst üblicherweise eine Vielzahl von über ein industrielles Kommunikationsnetz miteinander vernetzten Automatisierungsgeräten und dient im Rahmen einer Fertigungs- oder Prozessautomatisierung zur Steuerung oder Regelung von Anlagen, Maschinen bzw. Geräten. Aufgrund zeitkritischer Rahmenbedingungen in industriellen Automatisierungssystemen werden zur Kommunikation zwischen Automatisierungsgeräten überwiegend Echtzeit-Kommunikationsprotokolle, wie PROFINET, PROFIBUS, Real-Time-Ethernet oder Time-Sensitive Networking (TSN), verwendet.

Aufgrund einer Nutzung für häufig äußerst unterschiedliche Anwendungen können in Ethernet-basierten Kommunikationsnetzen beispielsweise Probleme entstehen, wenn Netzressourcen für eine Übermittlung von Datenströmen oder von Datenrahmen mit Echtzeitanforderungen konkurrierend für eine Übermittlung von Datenrahmen mit großem Nutzdateninhalt ohne spezielle Dienstgüteanforderungen beansprucht werden. Dies kann dazu führen, dass Datenströme oder Datenrahmen mit Echtzeitanforderungen nicht entsprechend einer angeforderten bzw. benötigten Dienstgüte übermittelt werden.

In WO 2018/010949 A1 ist ein Verfahren zum Aufbau gesicherter Kommunikationsverbindungen zu einem industriellen Automatisierungssystem beschrieben, bei dem eine Verbindungsverwaltungseinrichtung bei einem positiven Berechtigungsüberprüfungsergebnis Zugriffskontrollinformationen zum Aufbau einer verschlüsselten Kommunikationsverbindung zwischen einem ersten Kommunikationsgerät eines anfordernden Benutzers und einem ausgewählten zweiten Kommunikationsgerät für diese Kommunikationsgeräte bereitstellt. Dabei wird die Verbindungsverwaltungseinrichtung durch eine auf einem Firewall-System ablaufende Server-Instanz gebildet. Über eine verschlüsselte Kommunikationsverbindung zwischen dem ersten Kommunikationsgerät des anfordernden Benutzers und dem ausgewählten zweiten Kommunikationsgerät übermittelte Datenpakete werden für eine auf festgelegten Sicherheitsregeln basierende Überprüfung durch das Firewall-System entschlüsselt und bei erfolgreicher Überprüfung verschlüsselt zum ersten Kommunikationsgerät des anfordernden Benutzers oder zum ausgewählten zweiten Kommunikationsgerät weitergeleitet.

In industriellen Automatisierungssystemen übliche Zellenschutz-Konzepte sehen grundsätzlich nicht vor, dass sich Kommunikationsgeräte bzw. Clients von außerhalb einer Zelle eines Automatisierungssystems mit Automatisierungsgeräten bzw. Servern in einer Zelle verbinden dürfen. OPC UA bietet mit Reverse Connect ein Konzept, damit sich Automatisierungsgeräte bzw. Server aktiv mit Clients verbinden können. Dabei erfolgt ein Verbindungsaufbau ausgehend vom jeweiligen Automatisierungsgerät bzw. Server in Richtung eines Clients. Auf diese Weise wird den Zellenschutz-Konzepten Rechnung getragen. Problematisch ist jedoch, dass Client-Software und ggf. Software in Rendez-vous-Servern für OPC UA Reverse Connect angepasst sein muss. Bisher sind entsprechende OPC UA Clients bzw. Rendez-vous-Server nur eingeschränkt verfügbar. Außerdem erschweren bei in Automatisierungsgeräten eingebetteten OPC UA Servern erforderliche Firmware-Updates eine Anwendung von OPC UA Reverse Connect.

Außerdem ist bei OPC UA Reverse Connect eine spezialisierte Broker-Infrastruktur für ein dynamisches Parametrieren von Reverse Connect Verbindungen in OPC UA Servern erforderlich. Eine solche Broker-Infrastruktur ist jedoch nicht Bestandteil von OPC UA Spezifikationen. Mangels etablierter Standards oder allgemein anerkannter Konzepte resultiert hieraus für Betreiber von industriellen Automatisierungssystemen eine unbefriedigende Investitionssicherheit. Insbesondere sollte eine Broker-Infrastruktur aufwandsarm und gleichzeitig im Einklang mit bestehenden Zellenschutz-Konzepten zu realisieren sein.

Der vorliegenden Erfindung liegt die Aufgabe zugrunde, ein einfach in bestehenden Kommunikationssystemen realisierbares Verfahren zum Aufbau einer Verbindung zwischen einem Kommunikationsgerät außerhalb einer geschützten Zone und einem Server in der geschützten Zone anzugeben, das keine Änderungen am Kommunikationsgerät und am Server erfordert, sowie geeignete Vorrichtungen zur Implementierung des Verfahrens anzugeben.

Diese Aufgabe wird erfindungsgemäß durch ein Verfahren mit den in Anspruch 1 angegebenen Merkmalen, durch einen außerhalb eines gegenüber unautorisiertem Zugriff gesicherten Kommunikationsnetzes anordenbaren Proxy mit den in Anspruch 13 angegebenen Merkmalen und durch einen in einem gegenüber unautorisiertem Zugriff gesicherten Kommunikationsnetz anordenbaren Proxy mit den in Anspruch 15 angegebenen Merkmalen gelöst. Vorteilhafte Weiterbildungen der vorliegenden Erfindung sind in den abhängigen Ansprüchen angegeben.

Entsprechend dem erfindungsgemäßen Verfahren zum Aufbau einer vorzugsweise bidirektionalen Verbindung zwischen einem Kommunikationsgerät, das außerhalb eines gegenüber unautorisiertem Zugriff gesicherten Kommunikationsnetzes angeordnet ist, und einem Server, der im gesicherten Kommunikationsnetz angeordnet ist, sendet das Kommunikationsgerät eine Anforderung zum Aufbau einer Verbindung mit dem Server. Auf diese Anforderung wird eine Verbindung des Kommunikationsgeräts mit einem ersten, außerhalb des gesicherten Kommunikationsnetzes angeordneten Proxy aufgebaut. Außerdem überprüft der erste Proxy ein Bestehen einer von einem zweiten, im gesicherten Kommunikationsnetz angeordneten Proxy aufgebauten Verbindung zum ersten Proxy.

Ein Proxy ist insbesondere eine Netzwerkkomponente, die als Vermittler agiert, um einerseits eine Anfrage eines ersten Kommunikationsteilnehmers für einen Verbindungsaufbau zu einem zweiten Kommunikationsteilnehmer entgegenzunehmen und andererseits unter Verwendung seiner eigenen Adresse eine Verbindung zum zweiten Kommunikationsteilnehmer herzustellen. Die Verbindung zwischen Kommunikationsgerät und dem Server kann beispielsweise eine TCP-, TLS-, HTTP-, HTTPS- oder Websocket-Verbindung oder eine OPC UA Client-Server-Verbindung in eine geschützte Zone, insbesondere eine mittels eines Firewall-Systems geschützte Zelle eines industriellen Automatisierungssystems, sein. Vorzugsweise ist der zweite Proxy ein Reverse Proxy. Ein solcher Reverse Proxy ist insbesondere dafür vorgesehen, durch Clients bzw. Client-Kommunikationsgeräte angeforderte Ressourcen von einem oder mehreren Servern abzurufen.

Erfindungsgemäß verknüpft der erste Proxy eine bestehende Verbindung vom zweiten Proxy zum ersten Proxy mit der Verbindung zwischen dem Kommunikationsgerät und dem ersten Proxy zu einer Verbindung zwischen dem Kommunikationsgerät und dem zweiten Proxy. Darüber hinaus wird die Anforderung des Kommunikationsgeräts über die Verbindung zwischen dem Kommunikationsgerät und dem zweiten Proxy zum zweiten Proxy weitergeleitet. Der zweite Proxy baut auf die Anforderung eine Verbindung vom zweiten Proxy zum Server auf und diese verknüpft mit der Verbindung zwischen dem Kommunikationsgerät und dem zweiten Proxy zu einer Verbindung zwischen dem Kommunikationsgerät und dem Server. Vorzugsweise baut der zweite Proxy die Verbindung vom zweiten Proxy zum Server auf, sobald der zweite Proxy eine Information über die durch das Kommunikationsgerät gesendete Anforderung empfängt.

Insgesamt können mit der vorliegenden Erfindung bestehende Clients und Server ohne Anpassungen und ohne Verletzung von Zellenschutz-Konzepten in industriellen Automatisierungssystemen weiterverwendet werden. Insbesondere sind Client- bzw. Server-seitig keine Firmware-Updates zur Nutzung von Reverse Connect Funktionen erforderlich.

Entsprechend einer bevorzugten Ausgestaltung der vorliegenden Erfindung umfasst die durch das Kommunikationsgerät gesendete Anforderung eine Adresse oder Bezeichnung des Servers als Verbindungsziel. Insbesondere wird das Verbindungsziel mittels Filter-Regeln auf den ersten Proxy umgeleitet. Somit ist die Nutzung von Reverse Connect Funktionen für das Kommunikationsgerät transparent. Vorteilhafterweise ermittelt der erste Proxy den zweiten Proxy anhand einer von der durch das Kommunikationsgerät gesendeten Anforderung umfassten Adresse oder Bezeichnung des Servers. Somit sind keine zusätzlichen Angaben oder Maßnahmen zur Ermittlung des zweiten Proxys erforderlich.

Vorzugsweise baut der erste oder der zweite Proxy bereits vor Überprüfung des Bestehens einer vom zweiten Proxy zum ersten Proxy aufgebauten Verbindung einen Steuerungskanal zwischen dem ersten und dem zweiten Proxy auf. Über den Steuerungskanal kann der erste Proxy eine Anforderung zum Aufbau einer Verbindung vom zweiten Proxy zum ersten Proxy an den zweiten Proxy senden, falls eine solche Verbindung entsprechend der Überprüfung durch den ersten Proxy nicht besteht. Darüber hinaus können über den Steuerungskanal Informationen über verfügbare Server, Server-Namen, Server-Adressen, verfügbare erste Proxies bzw. verfügbare zweites Proxies ausgetauscht werden. Somit können sämtliche zur Nutzung von Reverse Connect Funktionen erforderliche Informationen effizient verfügbar gemacht werden.

Entsprechend einer weiteren vorteilhaften Ausgestaltung der vorliegenden Erfindung baut der zweite Proxy eine weitere Verbindung zum ersten Proxy auf, sobald die bestehende Verbindung vom zweiten Proxy zum ersten Proxy für die Verbindung zwischen dem Kommunikationsgerät und dem Server genutzt wird. Somit wird immer eine Reserve-Verbindung vom zweiten zum ersten Proxy vorgehalten, wodurch ein beschleunigter Verbindungsaufbau zwischen dem Kommunikationsgerät und dem Server realisiert werden kann. Entsprechend einer alternativen Ausführungsform der vorliegenden Erfindung wird über die Verbindung zwischen dem ersten und dem zweiten Proxy eine Vielzahl von Verbindungen zwischen mehreren Kommunikationsgeräten und mehreren Servern mittels Multiplexen gebündelt.

Der erfindungsgemäße Kommunikationsgeräte-seitige Proxy ist zur Durchführung eines Verfahrens entsprechend vorangehenden Ausführungen vorgesehen und außerhalb eines gegenüber unautorisiertem Zugriff gesicherten Kommunikationsnetzes anordenbar. Dieser Proxy ist dafür ausgestaltet und eingerichtet, auf eine Anforderung eines außerhalb des gesicherten Kommunikationsnetzes angeordneten Kommunikationsgeräts zum Aufbau einer Verbindung zu einem im gesicherten Kommunikationsnetz angeordneten Server eine Verbindung mit dem Kommunikationsgerät aufzubauen. Außerdem ist der Kommunikationsgeräte-seitige Proxy dafür ausgestaltet und eingerichtet, ein Bestehen einer von einem weiteren, im gesicherten Kommunikationsnetz angeordneten Proxy (RCIP) aufgebauten Verbindung zum Proxy zu überprüfen und ggf. eine bestehende Verbindung vom weiteren Proxy zum Proxy mit der Verbindung vom Kommunikationsgerät zum Proxy zu einer Verbindung zwischen dem Kommunikationsgerät und dem weiteren Proxy zu verknüpfen. Darüber hinaus ist der Kommunikationsgeräte-seitige Proxy dafür ausgestaltet und eingerichtet, die Anforderung über die Verbindung zwischen dem Kommunikationsgerät und dem weiteren Proxy zum weiteren Proxy weiterzuleiten. Insbesondere kann der Kommunikationsgeräte-seitige Proxy in das Kommunikationsgerät integriert sein.

Der erfindungsgemäße Server-seitige Proxy ist zur Durchführung eines Verfahrens entsprechend vorangehenden Ausführungen vorgesehen und in einem gegenüber unautorisiertem Zugriff gesicherten Kommunikationsnetzes anordenbar. Dieser Proxy ist dafür ausgestaltet und eingerichtet, auf eine Anforderung eines außerhalb des gesicherten Kommunikationsnetzes angeordneten Kommunikationsgeräts zum Aufbau einer Verbindung zu einem im gesicherten Kommunikationsnetz angeordneten Server eine Verbindung vom Proxy zum Server aufzubauen und diese Verbindung mit einer über einen weiteren, außerhalb des gesicherten Kommunikationsnetzes angeordneten Proxy aufgebauten Verbindung zwischen dem Kommunikationsgerät und dem Proxy zu einer Verbindung zwischen dem Kommunikationsgerät und dem Server zu verknüpfen.

Vorzugsweise ist der Server-seitige Proxy als Reverse Proxy ausgestaltet und eingerichtet. Damit sind keinerlei Anpassungen am Kommunikationsgerät bzw. am Server zur Nutzung von Reverse Connect Funktionen erforderlich.

Die vorliegende Erfindung wird nachfolgend an einem Ausführungsbeispiel anhand der Zeichnung näher beschrieben. Es zeigt
- Figur 1: mehrere Lösungen entsprechend dem Stand der Technik zur Verbindung eines außerhalb einer geschützten Automatisierungszelle angeordneten Clients mit einem innerhalb der geschützten Automatisierungszelle angeordneten Server,
- Figur 2: ein industrielles Automatisierungssystem mit mehreren geschützten Zellen, auf das mehrere außerhalb der geschützten Zellen angeordnete Client über zwei Proxies Zugriff erhalten.

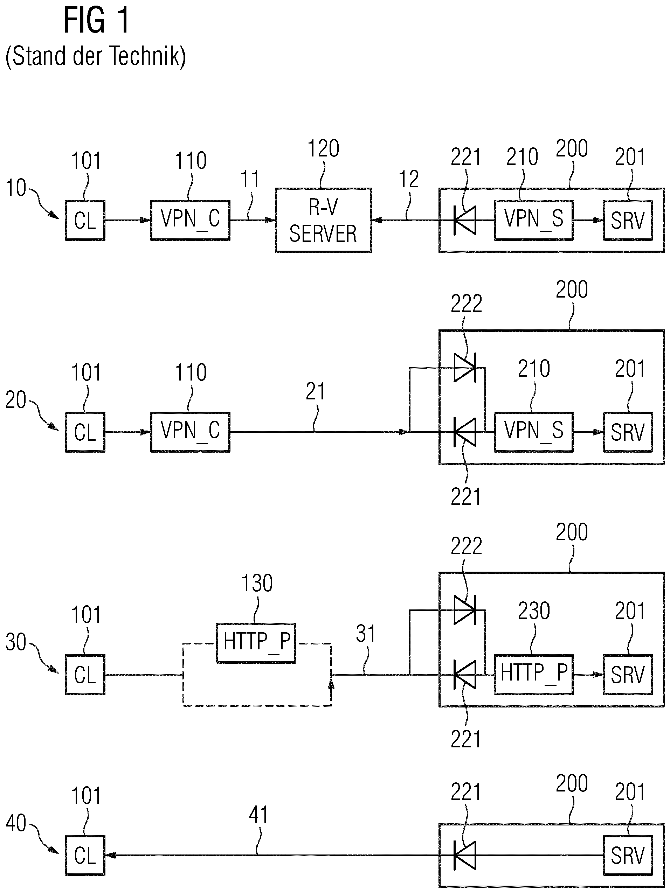

In Figur 1 sind 4 aus dem Stand der Technik bekannte Konzepte 10, 20, 30, 40 zur Verbindung eines außerhalb einer geschützten Automatisierungszelle 200 angeordneten Clients 101 mit einem innerhalb der geschützten Automatisierungszelle 200 angeordneten Server 201 dargestellt.

Entsprechend einem ersten Konzept 10 wird ein Rendez-vous-Server 120 verwendet, zu dem sowohl ein dem Client 101 zugeordneter VPN-Client 110 als auch ein dem Server 201 zugeordneter VPN-Server 210 jeweils eine VPN-Verbindung 11, 12 aufbauen. Während der VPN-Client 110 und der Rendez-vous-Server 120 außerhalb der geschützten Automatisierungszelle 200 angeordnet sind, ist der VPN-Server 210 von der geschützten Automatisierungszelle 200 umfasst. Der Rendez-vous-Server 120 koppelt die beiden VPN-Verbindungen zu einer Verbindung zwischen dem Client 101 und dem Server 201. Zum Schutz der Automatisierungszelle 200 vor eingehendem Datenverkehr ist eine vor den VPN-Server 210 geschaltete Datendiode 221 vorgesehen, die nur aus der Automatisierungszelle 200 ausgehenden Datenverkehr zulässt. Nachteilig am ersten Konzept 10 ist eine Verkopplung von IP-Adressen des Clients 101 einerseits und des Servers 201 andererseits, die typischerweise organisatorisch und technisch voneinander getrennt behandelt werden. Die VPN-Verbindungen 11, 12 können beispielsweise mittels IP-Sec aufgebaut werden.

Bei einem zweiten Konzept 20 entfällt gegenüber dem ersten Konzept 10 der Rendez-vous-Server 120. In diesem Fall baut der dem Client 101 zugeordnete VPN-Client 110 direkt eine VPN-Verbindung 21 mit dem VPN-Server 210 auf, der dem Server 201 zugeordnet und von der geschützten Automatisierungszelle 200 umfasst ist. Damit die durch den VPN-Client 110 aufgebaute VPN-Verbindung 21 nicht durch die Datendiode 221 für den aus der Automatisierungszelle 200 ausgehenden Datenverkehr blockiert wird, ist eigens für die VPN-Verbindung 21 eine zusätzliche Datendiode 222 vorgesehen, die Datenverkehr vom VPN-Client 110 zum VPN-Server 210 zulässt. Insgesamt weist das zweite Konzept 20 ähnliche Nachteile wie das erste Konzept 10 auf.

Ein drittes Konzept 30 basiert auf HTTP Forwarding und Reverse Proxies 130, 230 bzw. Layer 7 Routing. In diesem Fall wird eine unter Umständen mehrstufige HTTP-Verbindung 31 ausgehend vom Client 101 über die Proxies 130, 230 zum Server 201 aufgebaut. Falls ein Aufbau der HTTP-Verbindung 31 mehrstufig erfolgt, ist dies weder für den Client 101 noch für den Server 201 erkennbar. Auch beim dritten Konzept 30 ist zum Schutz der Automatisierungszelle 200 vor eingehendem Datenverkehr ist eine vor den VPN-Server 210 geschaltete Datendiode 221 vorgesehen, die nur aus der Automatisierungszelle 200 ausgehenden Datenverkehr zulässt. Damit die durch den VPN-Client 110 aufgebaute VPN-Verbindung 31 nicht durch die Datendiode 221 für den aus der Automatisierungszelle 200 ausgehenden Datenverkehr blockiert wird, ist für die HTTP-Verbindung 31 eine spezielle Datendiode 222 vorgesehen, welche die HTTP-Verbindung 31 vom Client 101 zum Server 201 zulässt.

Charakteristisch für das dritte Konzept 30 ist, dass die HTTP-Verbindung 31 bei einem stufenweisen Aufbau immer vom Client 101 in Richtung zum Server 201 und sukzessive in entsprechender Reihenfolge aufgebaut wird. Durch Service-Mesh Infrastrukturen, wie istio.io, oder insbesondere durch Envoy oder Nginx HTTP-Proxies wird unterstützt, abschnittsweise zwischen HTTP und HTTPS zu wechseln, ohne dass dies für den Clients 101 und den Server 201 ersichtlich ist. Nachteilig am dritten Konzept 30 ist, dass ein Freischalten von Anfragen für HTTP-Verbindungen von außerhalb einer Automatisierungszelle in die Automatisierungszelle hinein auf Zellen-internen HTTP-Proxies erforderlich ist. Aus organisatorischen Gründen bzw. wegen eines entsprechenden Realisierungsaufwands ist dies häufig unerwünscht. Außerdem mangelt es in OPC UAbasierten Automatisierungsprodukten derzeit an einer hinreichenden HTTP-Unterstützung.

Entsprechend dem vierten in Figur 1 dargestellten Konzept 40 ist der Server 201 als OPC UA Server ausgestaltet und baut eine aus der Automatisierungszelle 200 ausgehende Transportschicht-Verbindung 41 zum Client 101 auf, der als OPC UA Client ausgestaltet ist. Gemäß OPC UA Standard ist hierfür kein Rendez-vous-Server erforderlich. Zum Schutz der Automatisierungszelle 200 vor eingehendem Datenverkehr ist auch beim vierten Konzept 40 eine Datendiode 221 vorgesehen, die nur aus der Automatisierungszelle 200 ausgehenden Datenverkehr zulässt. Konfigurationsdaten oder -wünsche für die Transportschicht-Verbindung 41 zwischen dem Client 101 und dem Server 201 können beispielsweise über einen zusätzlichen Nachrichten-Broker, wie AMQP, als Seitenkanal zwischen dem Client 101 und dem Server 201 ausgetauscht werden. Der Nachrichten-Broker dient dabei zur Vorbereitung eines Verbindungsaufbaus per Reverse Connect durch den Server 201.

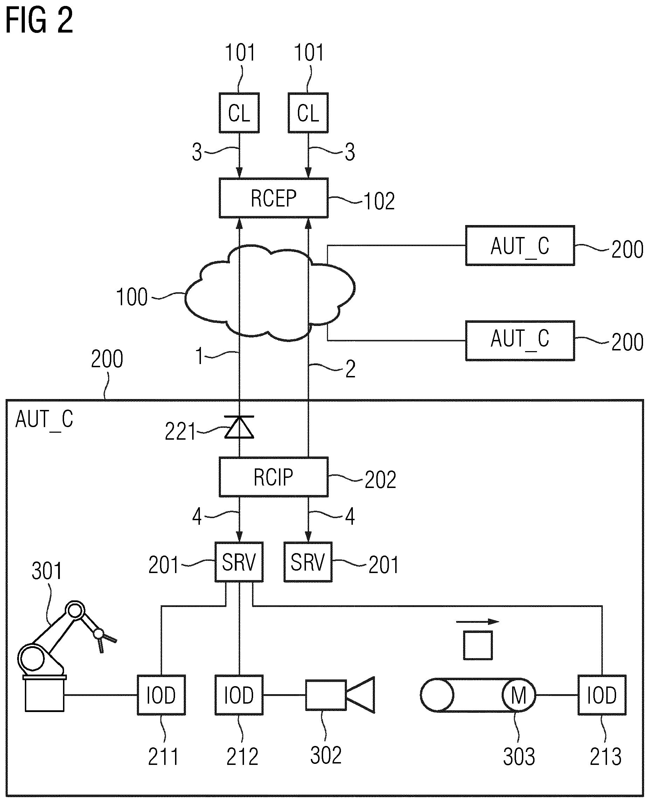

Das in Figur 2 dargestellte industrielle Automatisierungssystem umfasst mehrere Zellen 200, die jeweils mehrere Automatisierungsgeräte 201, 211-214 umfassen. Dabei stellen die Zellen 200 jeweils gegenüber unautorisiertem Zugriff gesicherte Kommunikationsnetze dar. Die Zellen 200 sind jeweils insbesondere mittels einer Datendiode 221 bzw. mittels eines Firewall-Systems oder Intrusion Detection System gegenüber unautorisiertem Zugriff von außen gesichert.

Im vorliegenden Ausführungsbeispiel sind die Zellen 200 über ein IP-basiertes Weitverkehrskommunikationsnetz 100 mit Client-Kommunikationsgeräten 101 zur Überwachung, Wartung oder Projektierung von Automatisierungsgeräten verbunden. Die Client-Kommunikationsgeräte 101 sind somit außerhalb der Zellen 200 bzw. außerhalb eines gegenüber unautorisiertem Zugriff gesicherten Kommunikationsnetzes angeordnet.

Automatisierungsgeräte können beispielsweise Bedien- und Beobachtungsstationen, speicherprogrammierbare Steuerungen, Eingabe/Ausgabe-Geräte (IO-Geräte), IO-Controller, RFID-Lesegeräte oder Systeme für maschinelle Bildverarbeitung sein. Im vorliegenden Ausführungsbeispiel umfasst eine Zelle jeweils mehrere Server 201, die Aufgaben einer speicherprogrammierbaren Steuerung wahrnehmen können, und mehrere IO-Geräte 211-214. Die IO-Geräte 211-214 dienen einem Austausch von Steuerungs- und Messgrößen zwischen einem Server 201 bzw. einer speicherprogrammierbaren Steuerung einerseits und durch den Server 201 bzw. die speicherprogrammierbare Steuerung gesteuerten Maschinen oder Vorrichtungen 301-303 andererseits.

Speicherprogrammierbare Steuerungen umfassen üblicherweise jeweils ein Kommunikationsmodul, eine Zentraleinheit sowie zumindest eine Eingabe/Ausgabe-Einheit. Die Zentraleinheit ist insbesondere für eine Ermittlung geeigneter Steuerungsgrößen aus erfassten Messgrößen vorgesehen. Über Kommunikationsmodule können speicherprogrammierbare Steuerungen beispielsweise mit einem Router, mit einem Switch bzw. mit einem Feldbus verbunden werden. Obige Komponenten speicherprogrammierbarer Steuerungen werden vorzugsweise über ein Rückwandbus-System miteinander verbunden.

Zum Aufbau einer Verbindung zwischen einem Client-Kommunikationsgerät 101 mit einem in einer Zelle 200 angeordneten Server 201 sendet das Client-Kommunikationsgerät 101 zunächst eine Anforderung zum Aufbau einer Verbindung mit dem Server 201. Auf diese Anforderung wird eine Verbindung 3 des Client-Kommunikationsgeräts 101 mit einem Reverse Connect Egress Proxy (RCEP) 102 aufgebaut, der einen außerhalb eines gegenüber unautorisiertem Zugriff gesicherten Kommunikationsnetzes angeordneten ersten Proxy darstellt. Grundsätzlich kann der Reverse Connect Egress Proxy 102 in das Client-Kommunikationsgerät 101 integriert sein.

Im vorliegenden Ausführungsbeispiel umfasst die durch das Client-Kommunikationsgerät 101 gesendete Anforderung eine Adresse oder Bezeichnung des Servers 201 als Verbindungsziel. Dieses Verbindungsziel wird mittels Filter-Regeln auf den Reverse Connect Egress Proxy 102 umgeleitet, insbesondere durch Einsatz von Envoy HTTP(S) Proxies in Service-Mesh-Technologie. Die Verbindung zwischen dem Client-Kommunikationsgerät 101 und dem Server 201 kann beispielsweise eine TCP-, TLS-, HTTP-, HTTPS- oder Websocket-Verbindung oder eine OPC UA Client-Server-Verbindung in eine geschützte Zone sein, die vorzugsweise bidirektional genutzt wird.

Der Reverse Connect Egress Proxy 102 überprüft grundsätzlich ein Bestehen einer von einem Reverse Connect Ingress Proxy (RCIP) 202 aufgebauten Verbindung 1 zum Reverse Connect Egress Proxy 102. Dabei stellt der Reverse Connect Ingress Proxy 202 einen zweiten, in einem gesicherten Kommunikationsnetz angeordneten Proxy dar. Vorzugsweise ermittelt der Reverse Connect Egress Proxy 102 den Reverse Connect Ingress Proxy 202 anhand einer von der durch das Client-Kommunikationsgerät 101 gesendeten Anforderung umfassten Adresse oder Bezeichnung des Servers 102.

Falls eine vom Reverse Connect Ingress Proxy 202 aufgebaute Verbindung 1 zum Reverse Connect Egress Proxy 102 besteht, verknüpft der Reverse Connect Egress Proxy 102 die bestehende Verbindung 1 vom Reverse Connect Ingress Proxy 202 zum Reverse Connect Egress Proxy 102 mit der Verbindung 3 zwischen dem Client-Kommunikationsgerät 101 und dem Reverse Connect Egress Proxy 102 zu einer Verbindung zwischen dem Client-Kommunikationsgerät 101 und dem Reverse Connect Ingress Proxy 202. Danach kann die Anforderung des Client-Kommunikationsgeräts 101 über die Verbindung zwischen dem Client-Kommunikationsgerät 101 und dem Reverse Connect Ingress Proxy 202 zum Reverse Connect Ingress Proxy 202 weitergeleitet werden. Der Reverse Connect Ingress Proxy 202 baut bei Empfang der Anforderung des Client-Kommunikationsgeräts 101 eine Verbindung 4 vom Reverse Connect Ingress Proxy 202 zum Server 201 auf und verknüpft diese mit der Verbindung zwischen dem Kommunikationsgerät und dem Reverse Connect Ingress Proxy 202 zu einer Verbindung zwischen dem Client-Kommunikationsgerät 101 und dem Server 201.

Vorzugsweise baut der Reverse Connect Ingress Proxy 202 die Verbindung vom Reverse Connect Ingress Proxy 202 zum Server 201 auf, sobald der Reverse Connect Ingress Proxy 202 eine Information über die durch das Client-Kommunikationsgerät 101 gesendete Anforderung empfängt. Hierfür erforderliche Information werden an den Reverse Connect Ingress Proxy 202 übermittelt. Diese Informationen können dabei explizit als eigenes Protokollelement ausgestaltet sein oder implizit von der Anfrage des Client-Kommunikationsgeräts umfasst sein.

Im vorliegenden Ausführungsbeispiel baut der Reverse Connect Egress Proxy 102 oder der Reverse Connect Ingress Proxy 202 bereits vor Überprüfung des Bestehens einer vom Reverse Connect Ingress Proxy 202 zum Reverse Connect Egress Proxy 102 aufgebauten Verbindung 1 einen Steuerungskanal 2 zwischen dem Reverse Connect Egress Proxy 102 und dem Reverse Connect Ingress Proxy 202 auf. Der Reverse Connect Egress Proxy 102 sendet über den Steuerungskanal 2 an den Reverse Connect Ingress Proxy 202 eine Anforderung zum Aufbau einer Verbindung 1 vom Reverse Connect Ingress Proxy 202 zum Reverse Connect Egress Proxy 102, falls eine solche Verbindung entsprechend der Überprüfung durch den Reverse Connect Egress Proxy 102 nicht besteht. Über den Steuerungskanal 2 werden insbesondere Informationen über verfügbare Server, Server-Namen, Server-Adressen und verfügbare Reverse Proxies ausgetauscht werden. Entsprechend einer weiteren vorteilhaften Ausgestaltung baut der Reverse Connect Ingress Proxy 202 eine weitere Verbindung zum Reverse Connect Egress Proxy 102 auf, sobald die bestehende Verbindung 1 vom Reverse Connect Ingress Proxy 202 zum Reverse Connect Egress Proxy 102 für die Verbindung zwischen dem Client-Kommunikationsgerät 101 und dem Server 201 genutzt wird. Somit wird stets eine Reserve-Verbindung vorgehalten. Alternativ dazu kann über die Verbindung 1 zwischen dem Reverse Connect Egress Proxy 102 und dem Reverse Connect Ingress Proxy 202 eine Vielzahl von Verbindungen zwischen mehreren Client-Kommunikationsgeräten und mehreren Servern mittels Multiplexen gebündelt werden.

## Patentansprüche

1. Verfahren zum Aufbau einer Verbindung zwischen einem Kommunikationsgerät, das außerhalb eines gegenüber unautorisiertem Zugriff gesicherten Kommunikationsnetzes angeordnet ist, und einem Server, der im gesicherten Kommunikationsnetz angeordnet ist, bei dem
- das Kommunikationsgerät (101) eine Anforderung zum Aufbau einer Verbindung mit dem Server (201) sendet,
- auf die Anforderung eine Verbindung (3) des Kommunikationsgeräts mit einem ersten, außerhalb des gesicherten Kommunikationsnetzes (200) angeordneten Proxy (102) aufgebaut wird,
- der erste Proxy ein Bestehen einer von einem zweiten, im gesicherten Kommunikationsnetz angeordneten Proxy (202) aufgebauten Verbindung (1) zum ersten Proxy überprüft,
- der erste Proxy eine bestehende Verbindung vom zweiten Proxy zum ersten Proxy mit der Verbindung zwischen dem Kommunikationsgerät und dem ersten Proxy zu einer Verbindung zwischen dem Kommunikationsgerät und dem zweiten Proxy verknüpft,
- die Anforderung über die Verbindung zwischen dem Kommunikationsgerät und dem zweiten Proxy zum zweiten Proxy weitergeleitet wird,
- der zweite Proxy auf die Anforderung eine Verbindung (4) vom zweiten Proxy zum Server aufbaut und diese mit der Verbindung zwischen dem Kommunikationsgerät und dem zweiten Proxy zu einer Verbindung zwischen dem Kommunikationsgerät und dem Server verknüpft.

2. Verfahren nach Anspruch 1,
bei dem die durch das Kommunikationsgerät gesendete Anforderung eine Adresse oder Bezeichnung des Servers als Verbindungsziel umfasst und bei dem das Verbindungsziel mittels Filter-Regeln auf den ersten Proxy umgeleitet wird.

3. Verfahren nach einem der Ansprüche 1 oder 2,
bei dem der erste Proxy den zweiten Proxy anhand einer von der durch das Kommunikationsgerät gesendeten Anforderung umfassten Adresse oder Bezeichnung des Servers ermittelt.

4. Verfahren nach einem der Ansprüche 1 bis 3,
bei dem der erste oder der zweite Proxy bereits vor Überprüfung des Bestehens einer vom zweiten Proxy zum ersten Proxy aufgebauten Verbindung einen Steuerungskanal zwischen dem ersten und dem zweiten Proxy aufbaut.

5. Verfahren nach Anspruch 4,
bei dem der erste Proxy (102) über den Steuerungskanal (2) an den zweiten Proxy (202) eine Anforderung zum Aufbau einer Verbindung vom zweiten Proxy zum ersten Proxy sendet, falls eine solche Verbindung entsprechend der Überprüfung durch den ersten Proxy nicht besteht.

6. Verfahren nach einem der Ansprüche 4 oder 5,
bei dem über den Steuerungskanal Informationen über verfügbare Server, Server-Namen, Server-Adressen, verfügbare erste Proxies und/oder verfügbare zweites Proxies ausgetauscht werden.

7. Verfahren nach einem der Ansprüche 1 bis 6,
bei dem der zweite Proxy eine weitere Verbindung zum ersten Proxy aufbaut, sobald die bestehende Verbindung vom zweiten Proxy zum ersten Proxy für die Verbindung zwischen dem Kommunikationsgerät und dem Server genutzt wird.

8. Verfahren nach einem der Ansprüche 1 bis 6,
bei dem über die Verbindung zwischen dem ersten und dem zweiten Proxy eine Vielzahl von Verbindungen zwischen mehreren Kommunikationsgeräten und mehreren Servern mittels Multiplexen gebündelt wird.

9. Verfahren nach einem der Ansprüche 1 bis 8,
bei dem der zweite Proxy die Verbindung vom zweiten Proxy zum Server aufbaut, sobald der zweite Proxy eine Information über die durch das Kommunikationsgerät gesendete Anforderung empfängt.

10. Verfahren nach einem der Ansprüche 1 bis 9,
bei dem die Verbindung zwischen Kommunikationsgerät und dem Server eine TCP-, TLS-, HTTP-, HTTPS- oder Websocket-Verbindung oder eine OPC UA Client-Server-Verbindung in eine geschützte Zone ist und bei dem die Verbindung zwischen dem Kommunikationsgerät und dem Server bidirektional genutzt wird.

11. Verfahren nach einem der Ansprüche 1 bis 10,
bei dem der zweite Proxy ein Reverse Proxy ist.

12. Verfahren nach einem der Ansprüche 1 bis 11,
bei dem der erste Proxy in das Kommunikationsgerät integriert ist.

13. Proxy zur Durchführung eines Verfahrens nach einem der Ansprüche 1 bis 12, wobei der Proxy
- außerhalb eines gegenüber unautorisiertem Zugriff gesicherten Kommunikationsnetzes anordenbar sowie dafür ausgestaltet und eingerichtet ist,
- auf eine Anforderung eines außerhalb des gesicherten Kommunikationsnetzes angeordneten Kommunikationsgeräts (CL) zum Aufbau einer Verbindung zu einem im gesicherten Kommunikationsnetz angeordneten Server (SRV) eine Verbindung mit dem Kommunikationsgerät aufzubauen,
- ein Bestehen einer von einem weiteren, im gesicherten Kommunikationsnetz angeordneten Proxy (RCIP) aufgebauten Verbindung zum Proxy (RCEP) zu überprüfen,
- eine bestehende Verbindung vom weiteren Proxy zum Proxy mit der Verbindung vom Kommunikationsgerät zum Proxy zu einer Verbindung zwischen dem Kommunikationsgerät und dem weiteren Proxy zu verknüpfen,
- die Anforderung über die Verbindung zwischen dem Kommunikationsgerät und dem weiteren Proxy zum weiteren Proxy weiterzuleiten.

14. Proxy nach Anspruch 13,
bei dem der Proxy in das Kommunikationsgerät integriert ist.

15. Proxy zur Durchführung eines Verfahrens nach einem der Ansprüche 1 bis 12 wobei der Proxy
- in einem gegenüber unautorisiertem Zugriff gesicherten Kommunikationsnetz anordenbar ist sowie dafür ausgestaltet und eingerichtet ist,
- auf eine Anforderung eines außerhalb des gesicherten Kommunikationsnetzes angeordneten Kommunikationsgeräts (CL) zum Aufbau einer Verbindung zu einem im gesicherten Kommunikationsnetz angeordneten Server (SRV) eine Verbindung vom Proxy (RCIP) zum Server aufzubauen und
- diese Verbindung mit einer über einen weiteren, außerhalb des gesicherten Kommunikationsnetzes angeordneten Proxy (RCEP) aufgebauten Verbindung zwischen dem Kommunikationsgerät und dem Proxy zu einer Verbindung zwischen dem Kommunikationsgerät und dem Server zu verknüpfen.

16. Proxy nach Anspruch 15,
bei dem der Proxy als Reverse Proxy ausgestaltet und eingerichtet ist.
